# EUROPEAN PATENT APPLICATION

(11) **EP 4 841 811 A1**
(43) Date of publication of application: **18.11.2026**
(21) Application number: 24934838.4
(22) Date of filing: 19.11.2024
(51) Int. Cl.: H01M 50/552, H01M 10/052, H01M 10/0525, H01M 10/054, H01M 10/04

(54) **BATTERY CELL AND MANUFACTURING METHOD THEREFOR, BATTERY, ENERGY STORAGE DEVICE, AND ELECTRIC DEVICE**

(30) Priority: 10.04.2024 CN 202410430440
(71) Applicant: Contemporary Amperex Technology Co., Limited, Ningde, Fujian 352100 (CN)
(72) Inventor: XING, Chengyou, Ningde, Fujian 352100 (CN); WU, Jiatong, Ningde, Fujian 352100 (CN); LI, Quankun, Ningde, Fujian 352100 (CN); WANG, Peng, Ningde, Fujian 352100 (CN); JIN, Haizu, Ningde, Fujian 352100 (CN)
(74) Representative: Kraus & Lederer PartGmbB
(86) International application number: PCT/CN2024/132978
(87) International publication number: WO 2025/213774

(57) **Abstract**

The present disclosure relates to the technical field of batteries. Disclosed are a battery cell and a manufacturing method therefor, a battery, an energy storage device, and an electric device. The battery cell comprises: a casing, the casing being provided with an accommodating cavity, and a first wall of the casing being provided with pole mounting holes; an electrode assembly, the electrode assembly being accommodated in the accommodating cavity; poles, at least part of each pole penetrating into the corresponding pole mounting hole and being connected to the electrode assembly; and seal rings, each seal ring being at least partially sandwiched between the outer peripheral surface of the corresponding pole and the inner wall of the corresponding pole mounting hole. Each seal ring in the battery cell is at least partially sandwiched between the outer peripheral surface of the corresponding pole and the inner wall of the pole mounting hole, so that the height space occupied by the seal ring can be reduced, thereby improving the volumetric energy density of battery cells.

## Description

### CROSS-REFERENCE TO RELATED APPLICATIONS

The present disclosure is based on and claims the priority to the Chinese Patent Application No. 202410430440.4, filed on April 10, 2024, entitled "BATTERY CELL AND MANUFACTURING METHOD THEREFOR, BATTERY, ENERGY STORAGE DEVICE, AND ELECTRIC DEVICE", which is incorporated herein by reference in its entirety.

### TECHNICAL FIELD

The present disclosure relates to the technical field of batteries, and in particular, to a battery cell and a manufacturing method therefor, a battery, an energy storage apparatus, and an electric apparatus.

### BACKGROUND

New energy batteries are increasingly widely used in daily life and industry. For example, new energy vehicles equipped with batteries have been widely used. In addition, batteries are increasingly used in energy storage and other fields. In new energy vehicles equipped with batteries, the batteries provide all or part of the power. In the energy storage field, batteries may be mounted in energy storage boxes or directly mounted on the user side.

With the continuous development of battery technology, the industry has been imposing increasingly higher requirements on the volumetric energy density of batteries.

### SUMMARY

To solve the above technical problems, the present disclosure provides a battery cell with a high volumetric energy density and a manufacturing method therefor, a battery, an energy storage apparatus, and an electric apparatus.

The present disclosure is achieved through the following technical solutions.

According to a first aspect of the present disclosure, a battery cell is provided, including a casing, where the casing is provided with an accommodating cavity, and a first wall of the casing is provided with a pole mounting hole; an electrode assembly, where the electrode assembly is accommodated in the accommodating cavity; a pole, where the pole is at least partially inserted into the pole mounting hole and connected to the electrode assembly; and a seal ring, where the seal ring is at least partially sandwiched between an outer peripheral surface of the pole and an inner wall of the pole mounting hole.

In the battery cell according to the embodiments of the present disclosure, the seal ring is at least partially sandwiched between the outer peripheral surface of the pole and the inner wall of the pole mounting hole. This reduces a height space occupied by the seal ring and improves the volumetric energy density of the battery cell.

In some embodiments, the battery cell further includes a fastening structure, and the pole is fastened to the first wall through the fastening structure.

The arrangement of the fastening structure achieves the fixed connection between the pole and the first wall of the casing, so that the seal ring is more firmly sandwiched between the outer peripheral surface of the pole and the inner wall of the pole mounting hole. This reduces the height space occupied by the seal ring, and improves the volumetric energy density of the battery cell.

In some embodiments, one of the outer peripheral surface of the pole and an inner peripheral surface of the fastening structure is provided with a recessed portion, and the other is provided with a protruding portion; and the protruding portion is engaged with the recessed portion.

In this way, the engagement between the recessed portion and the protruding portion improves the connection strength between the pole and the fastening structure, which helps improve the connection strength between the pole and the casing. In addition, since the seal ring is sandwiched between the outer peripheral surface of the pole and the inner wall of the pole mounting hole, the height space occupied by the seal ring is reduced, and the volumetric energy density of the battery cell is improved.

In some embodiments, the fastening structure includes a first fastening structure and a second fastening structure respectively connected to an outer surface and an inner surface of the first wall, the first fastening structure and the second fastening structure are separately connected to the outer peripheral surface of the pole, and the first fastening structure and the second fastening structure are respectively connected to two ends of the seal ring along an axial direction of the pole.

In this way, the connection strength between the fastening structure and the pole is improved, which helps improve the connection strength between the pole and the casing; moreover, the first fastening structure and the second fastening structure fasten the seal ring in an axial direction of the pole, which improves the reliability of the fastening of the seal ring and improves the sealing performance of the seal ring to the pole, thereby reducing the probability of electrolyte leakage, and further prolonging the service life of the battery cell. Further, since the seal ring is sandwiched between the outer peripheral surface of the pole and the inner wall of the pole mounting hole, the height space occupied by the seal ring is reduced, and the volumetric energy density of the battery cell is improved.

In some embodiments, both the first fastening structure and the second fastening structure are made of insulating materials.

In this way, the function of the fastening structure to fasten the pole is achieved, and the pole and the casing are insulated to implement the normal function of the battery cell.

In some embodiments, inner peripheral surfaces of the first fastening structure and the second fastening structure are each provided with at least one protruding portion, the outer peripheral surface of the pole is provided with at least two recessed portions, and the protruding portion is engaged with the recessed portion in a one-to-one correspondence.

In this way, the strengths of connection of the pole with the first fastening structure and the second fastening structure are improved, thereby improving the connection strength between the pole and the casing. Moreover, since the seal ring is sandwiched between the outer peripheral surface of the pole and the inner wall of the pole mounting hole, the height space occupied by the seal ring is reduced, and the volumetric energy density of the battery cell is improved.

In some embodiments, the outer surface of the first wall is provided with an engaging protrusion, and the first fastening structure is provided with a slot that engages with the engaging protrusion.

In this way, the connection strength between the casing and the first fastening structure is improved, thereby improving the structural strength of the battery cell; moreover, since the seal ring is sandwiched between the outer peripheral surface of the pole and the inner wall of the pole mounting hole, the height space occupied by the seal ring is reduced, and the volumetric energy density of the battery cell is improved.

In some embodiments, at least two poles are provided, the seal ring is sandwiched between each of the poles and an inner wall of a pole mounting hole into which the pole is inserted, the at least two poles include a first pole and a second pole, the first pole is connected to a negative electrode tab of the electrode assembly, and the second pole is connected to a positive electrode tab of the electrode assembly.

The first pole is connected to the negative electrode tab of the electrode assembly, and the second pole is connected to the positive electrode tab of the electrode assembly. Then, the first pole serves as a negative electrode pole of the battery cell, and the second pole serves as a positive electrode pole of the battery cell. The seal rings of both the positive electrode pole and the negative electrode pole are sealed radially, which reduces the height space occupied by the seal rings and improves the volumetric energy density of the battery cell.

In some embodiments, the first pole includes a first pole portion and a second pole portion connected to the first pole portion, and an end of the second pole portion facing away from the first pole portion is connected to the negative electrode tab; and the first pole portion and the second pole portion are made of different conductive materials, and the first pole portion is made of aluminum material.

The first pole serves as the negative electrode pole of the battery cell. The second pole portion is interposed between the first pole portion and the accommodating cavity, so that the electrolyte in the accommodating cavity is not prone to contact the first pole portion. Therefore, even if the first pole portion is made of aluminum material, corrosion of the aluminum material due to contact between the electrolyte and the aluminum material is not likely to occur. Moreover, the cost of aluminum material is low, so the material cost of the battery cell is reduced. Moreover, an end of the first pole portion close to the accommodating cavity is inserted into a groove of the second pole portion, which further reduces the probability that the first pole portion comes into contact with the electrolyte in the accommodating cavity and further reduces the probability that the electrolyte corrodes the aluminum material.

In some embodiments, the second pole portion is made of copper material.

Copper material as a negative electrode is not prone to oxidation reaction with the electrolyte, that is, the electrolyte is not prone to corrode the copper material. Therefore, using copper material for the second pole portion close to the electrolyte reduces the probability that the electrolyte corrodes the first pole, which helps prolong the service life of the battery cell.

In some embodiments, a surface of the second pole portion facing away from the accommodating cavity is formed with a groove, and a part of the first pole portion is inserted into the groove.

In the battery cell according to the embodiments of the present disclosure, the part of the first pole portion is inserted into the groove of the second pole portion, which may increase a contact area between the first pole portion and the second pole portion, thereby improving the connection strength between the two. Moreover, when an external force is applied in a direction perpendicular to an insertion direction of the first pole portion and the second pole portion, since the part of the first pole portion and the groove of the second pole portion form an engagement, the first pole is not prone to deformation or disconnection at the connection between the first pole portion and the second pole portion, thereby improving the structural strength of the first pole and further improving the structural strength of the battery cell.

In some embodiments, the groove does not penetrate through into a surface of the second pole portion facing the accommodating cavity and does not penetrate through into an outer peripheral surface of the second pole portion.

In this way, the second pole portion is interposed between the accommodating cavity and the first pole portion, which reduces the probability that the electrolyte contacts the first pole portion, thereby reducing the probability that the first pole portion is corroded, which helps prolong the service life of the battery cell.

In some embodiments, the outer peripheral surface of the second pole portion is provided with at least one recessed portion, and the recessed portion provided on the second pole portion does not penetrate through into an inner wall of the groove.

In this way, the connection strength between the second pole portion and the fastening structure is improved, and the recessed portion does not penetrate through into the inner wall of the groove, which reduces the probability that the electrolyte enters the groove to contact the first pole portion, reducing the probability that the first pole portion is corroded, and prolonging the service life of the battery cell.

In some embodiments, a minimum distance between the surface of the second pole portion facing the accommodating cavity and an inner wall of the groove facing away from the accommodating cavity is not less than 1 mm.

In this way, the part of the second pole portion interposed between the first pole portion and the accommodating cavity is relatively thick, which reduces the probability that the second pole portion penetrates this part during welding to the first pole portion, thereby reducing the probability that the first pole portion is corroded, which helps prolong the service life of the battery cell.

In some embodiments, the first pole portion includes a base and an insertion portion connected to an end of the base facing the accommodating cavity, the insertion portion is inserted into the groove, an outer peripheral edge of the base extends beyond the insertion portion and forms a flange surface facing the accommodating cavity at a connection position between the two, the flange surface and an end surface of an end of the second pole portion facing away from the accommodating cavity jointly define a first interface, a surface of the seal ring facing away from the accommodating cavity and the first fastening structure jointly define a second interface, and the first interface is offset from the second interface toward a side away from the accommodating cavity.

The formation of the first interface further increases the contact area between the first pole portion and the second pole portion, thereby further improving the structural strength of the pole and further improving the structural strength of the battery cell. The first interface is offset from the second interface toward the side away from the accommodating cavity, so that the seal ring contacts the second pole portion and does not contact the first pole portion. In this way, the electrolyte is less likely to contact the first pole portion and further prolongs the service life of the battery cell.

According to a second aspect of the present disclosure, a battery is provided. The battery includes at least one battery cell described above.

Since the battery includes the battery cell according to the first aspect, the battery includes all the beneficial effects of the battery cell, and therefore, a volumetric energy density of the battery is improved.

According to a third aspect of the present disclosure, an energy storage apparatus is provided. The energy storage apparatus includes the above battery cell or the above battery.

Since the battery cell according to the first aspect or the battery according to the second aspect has a high volumetric energy density, the occupation of space inside the energy storage apparatus is reduced or higher total energy is stored in a limited space.

According to a fourth aspect of the present disclosure, an electric apparatus is provided. The electric apparatus includes the above battery cell or the above battery for providing electric energy.

Since the battery cell according to the first aspect or the battery according to the second aspect has a high volumetric energy density, the occupation of space inside the electric apparatus is reduced or higher total energy is provided in a limited space.

According to a fifth aspect of the present disclosure, a manufacturing method for battery cell is provided, including:
providing a casing, an electrode assembly, a pole, and a seal ring, where a first wall of the casing is provided with a pole mounting hole;
sleeving the seal ring onto an outer peripheral side of the pole, to obtain a first structure; and
sleeving the first wall onto an outer peripheral side of the seal ring through the pole mounting hole, to obtain a second structure.

The seal ring in the second structure is sandwiched between an outer peripheral surface of the pole and an inner wall of the pole mounting hole.

In the battery cell manufactured by using the manufacturing method for battery cell according to the embodiments of the present disclosure, the seal ring is at least partially sandwiched between the outer peripheral surface of the pole and the inner wall of the pole mounting hole. This reduces the height space occupied by the seal ring and improves the volumetric energy density of the battery cell.

In some embodiments, after obtaining the second structure, the method further includes:
performing injection molding on the second structure, to form a fastening structure connecting the pole and the first wall.

The fastening structure formed by injection molding enables the pole to be fixedly connected to the first wall of the casing, so that the seal ring is more firmly sandwiched between the outer peripheral surface of the pole and the inner wall of the pole mounting hole. This reduces the height space occupied by the seal ring and improves the volumetric energy density of the battery cell.

### Beneficial effects

Through the present disclosure, a battery cell with a high volumetric energy density and a manufacturing method therefor, a battery, an energy storage apparatus, and an electric apparatus are provided.

### BRIEF DESCRIPTION OF DRAWINGS

By reading the detailed description of the preferred embodiments below, various other advantages and benefits will become clear to those of ordinary skill in the art. The drawings are only used for the purpose of illustrating the preferred embodiments and are not considered to limit the present disclosure. Moreover, in all the drawings, the same components are denoted by the same reference signs. In the drawings:
FIG. 1 is a schematic structural diagram of a vehicle according to some embodiments of the present disclosure;
FIG. 2 is a schematic three-dimensional exploded view of a battery according to some embodiments of the present disclosure;
FIG. 3 is a schematic three-dimensional structural diagram of a battery cell according to some embodiments of the present disclosure;
FIG. 4 is a schematic exploded view of a battery cell according to some embodiments of the present disclosure;
FIG. 5 is a schematic three-dimensional structural diagram of an end cap of a battery cell according to some embodiments of the present disclosure;
FIG. 6 is a schematic three-dimensional exploded view of a structure at an end cap of a battery cell according to some embodiments of the present disclosure;
FIG. 7 is a cross-sectional view of a first pole according to some embodiments of the present disclosure;
FIG. 8 is a cross-sectional view of a structure at a first pole of a battery cell according to some embodiments of the present disclosure;
FIG. 9 is a cross-sectional view of a second pole according to some embodiments of the present disclosure;
FIG. 10 is a cross-sectional view of a first fastening structure according to some embodiments of the present disclosure;
FIG. 11 is a cross-sectional view of a second fastening structure according to some embodiments of the present disclosure; and
FIG. 12 is a flowchart of a manufacturing method for battery cell according to some embodiments of the present disclosure.

Description of reference signs
1000 vehicle; 100 battery; 200 controller; 300 motor; 10 battery box; 101 box cover; 102 box body; 20 battery cell; 1 casing; 11 end cap; 111 pole mounting hole; 112 engaging protrusion; 113 pressure relief mechanism; 114 insulating structure; 115 pressure relief mechanism protective patch; 12 shell; 13 current collector; 2 electrode assembly; 21 negative electrode tab; 22 positive electrode tab; 3 pole; 3a first pole; 3b second pole; 31 first pole portion; 311 recessed portion; 312 base; 313 insertion portion; 314 first interface; 32 second pole portion; 4 seal ring; 41 second interface; 5 fastening structure; 51 first fastening structure; 511 protruding portion; 512 slot; 52 second fastening structure; 6 bottom support plate; 7 insulating sheet; 8 top cover patch; and 9 blue film.

### DESCRIPTION OF EMBODIMENTS

The embodiments of the technical solutions of the present disclosure will be described in detail below with reference to the accompanying drawings. The following embodiments are only used to illustrate the technical solutions of the present disclosure more clearly, and are therefore only used as examples and cannot be used to limit the protection scope of the present disclosure.

Unless otherwise defined, all technical and scientific terms used herein have the same meaning as those generally understood by those skilled in the art to which the present disclosure pertains; the terms used herein are only for the purpose of describing specific embodiments and are not intended to limit the present disclosure; the terms "include" and "have" and any variations thereof in the description and the above drawings of the present disclosure are intended to cover non-exclusive inclusion.

In the description of the embodiments of the present disclosure, the technical terms "first", "second", "third", and the like are only used to distinguish different objects and cannot be understood as indication or implication of relative importance or implicit indication of a quantity, specific order, or primary-secondary relationship of the indicated technical features. In the description of the embodiments of the present disclosure, the meaning of "plurality" is two or more, unless otherwise clearly and specifically limited.

The reference to "an embodiment" herein means that a specific feature, structure or characteristic described with reference to the embodiment may be included in at least one embodiment of the present disclosure. The appearance of the phrase in various positions in the description does not necessarily refer to the same embodiment, nor is it an independent or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only a description of an association relationship of associated objects, indicating that three relationships may exist. For example, A and/or B may mean: A exists alone, A and B exist, and B exists alone. In addition, the character "/" in this document generally indicates that the associated objects before and after are in an "or" relationship.

In the description of the embodiments of the present disclosure, the orientation or positional relationship indicated by the technical terms "length", "width", "thickness", "upper", "lower", "front", "rear", "left", "right", "vertical", "horizontal", "top", "bottom", "inner", "outer", "circumferential", or the like are based on the orientation or positional relationship shown in the drawings, and are only for the convenience of describing the embodiments of the present disclosure and simplifying the description, and do not indicate or imply that the apparatus or element referred to must have a specific orientation, or be constructed and operated in a specific orientation, and therefore cannot be understood as a limitation on the embodiments of the present disclosure.

In the description of the embodiments of the present disclosure, unless otherwise clearly specified and limited, the technical terms "mount", "connect", "join", "fasten", and the like should be understood in a broad sense. For example, it may be a fixed connection, a detachable connection, or an integral connection; it may be a mechanical connection or an electrical connection; it may be a direct connection or an indirect connection through an intermediate medium, or it may be the internal communication of two elements or the interaction relationship between two elements. For those of ordinary skill in the art, the specific meaning of the above terms in the embodiments of the present disclosure may be understood according to the specific circumstances.

In the description of the embodiments of the present disclosure, unless otherwise clearly specified and limited, the technical term "contact" should be understood in a broad sense. It may be direct contact or contact through an intermediate medium layer. It may be contact between two contacting elements with substantially no interaction force, or contact between two contacting elements with interaction force.

The present disclosure is described in detail below.

At present, new energy batteries are increasingly widely used in daily life and industry. New energy batteries are not only used in energy storage power systems such as hydropower, thermal power, wind power and solar power stations, but also in electric transportation mobility devices such as electric bicycles, electric motorcycles and electric vehicles, as well as in many fields such as aerospace. With the continuous expansion of the application field of traction batteries, the market demand is also continuously increasing.

In the embodiments of the present disclosure, the battery may be a battery cell.

The inventors of the present disclosure have noticed that the existing top cover is assembled and sealed by axially compressing a seal ring, that is, the seal ring is sandwiched between an axial end surface of a pole and a casing, occupying a large height space, resulting in a low energy density of the battery cell. After research, the inventors of the present disclosure have found that instead of axial sealing, radial sealing is used, that is, the seal ring is sandwiched between an outer peripheral surface of the pole and an inner wall of a pole mounting hole, to reduce the height space occupied by the seal ring, thereby improving a volumetric energy density of the battery cell.

Based on such a design concept, the inventors of the present disclosure have designed a battery cell. The battery cell includes a casing, an electrode assembly, a pole, and a seal ring. The casing has an accommodating cavity, and a first wall of the casing is provided with a pole mounting hole; the electrode assembly is accommodated in the accommodating cavity; the pole is at least partially inserted into the pole mounting hole and connected to the electrode assembly; and the seal ring is at least partially sandwiched between an outer peripheral surface of the pole and the inner wall of the pole mounting hole.

The seal ring is at least partially sandwiched between the outer peripheral surface of the pole and the inner wall of the pole mounting hole. This reduces the height space occupied by the seal ring, thereby improving the volumetric energy density of the battery cell.

The battery cell according to the embodiments of the present disclosure may be, but is not limited to, used in an electric apparatus or an energy storage apparatus. The electric apparatus may be, but is not limited to, a vehicle, a ship, an aircraft, or the like, for example, a mobile phone, a portable device, a notebook computer, an electric bicycle, an electric toy, an electric tool, a vehicle, a ship and a spacecraft, and the like. For example, a spacecraft includes an airplane, a rocket, a space shuttle, a spaceship, or the like. The energy storage apparatus may be, but is not limited to, an energy storage container, an energy storage cabinet, and the like.

The present disclosure further provides a battery. The battery may include one or more battery cells to provide a single physical module with a higher voltage and capacity. When multiple battery cells are provided, the multiple battery cells are connected in series, in parallel, or in series-parallel through a busbar.

In some embodiments of the present disclosure, the battery may be a battery module. When multiple battery cells are provided, the multiple battery cells are arranged and fastened to form a battery module.

In some embodiments of the present disclosure, the battery may be a battery pack. The battery pack includes a battery box and a battery cell. The battery cell or the battery module is accommodated in the battery box.

In some embodiments of the present disclosure, the battery box may be used as a part of a chassis structure of a vehicle. For example, a part of the battery box may be at least a part of a floor of the vehicle, or a part of the battery box may be at least a part of a cross beam and a longitudinal beam of the vehicle.

The battery according to the embodiments of the present disclosure may be, but is not limited to, used in an electric apparatus or an energy storage apparatus. The electric apparatus may be, but is not limited to, a vehicle, a ship, an aircraft, or the like, for example, a mobile phone, a portable device, a notebook computer, an electric bicycle, an electric toy, an electric tool, a vehicle, a ship and a spacecraft, etc. For example, a spacecraft includes an airplane, a rocket, a space shuttle, a spaceship, and the like. The energy storage apparatus may be, but is not limited to, an energy storage container, an energy storage cabinet, and the like.

The embodiments of the present disclosure further provide an energy storage apparatus. The energy storage apparatus includes a battery cell or a battery.

The energy storage apparatus according to the embodiments of the present disclosure may be, but is not limited to, an energy storage container, an energy storage cabinet, or the like.

The embodiments of the present disclosure further provide an electric apparatus. The electric apparatus includes a battery cell or a battery for providing electric energy.

The electric apparatus according to the embodiments of the present disclosure may be, but is not limited to, a mobile phone, a tablet, a notebook computer, an electric toy, an electric tool, an electric bicycle, an electric vehicle, a ship, a spacecraft, and the like. The electric toy may include fastened or mobile electric toy, such as a game console, electric car toy, electric ship toy, electric airplane toy, and the like. The spacecraft may include an airplane, rocket, space shuttle, spaceship, and the like.

In the following embodiments, for the convenience of description, as an example, the electric apparatus according to an embodiment of the present disclosure is a vehicle 1000 for description. The description is made below with reference to the accompanying drawings.

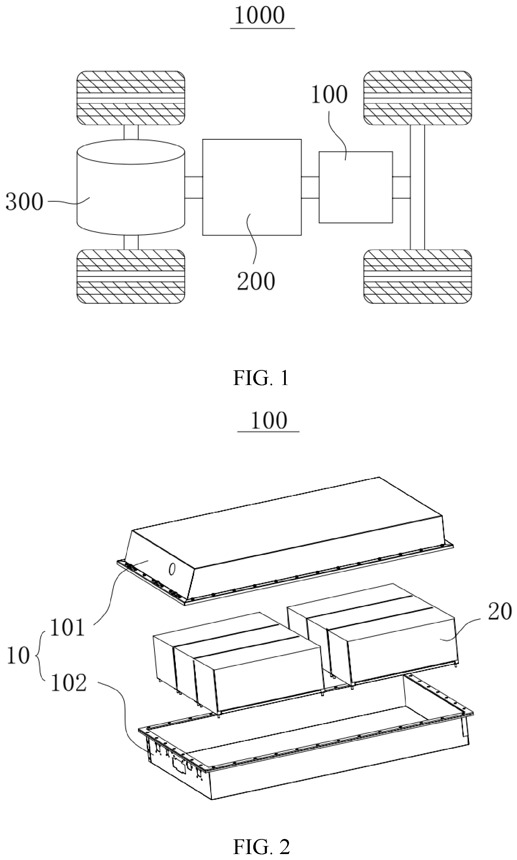

FIG. 1 is a schematic structural diagram of a vehicle 1000 according to some embodiments of the present disclosure.

The vehicle 1000 may be a fuel vehicle, a gas vehicle, or a new energy vehicle. The new energy vehicle may be a pure electric vehicle, a hybrid vehicle, an extended-range vehicle, or the like. As shown in FIG. 1, a battery 100 is provided inside the vehicle 1000, and the battery 100 may be provided at a bottom, head or tail of the vehicle 1000. The battery 100 may be used to supply power to the vehicle 1000. For example, the battery 100 may serve as an operating power source for the vehicle 1000. The vehicle 1000 may further include a controller 200 and a motor 300. The controller 200 is used to control the battery 100 to supply power to the motor 300, for example, to satisfy the operation power requirements for starting, navigation, and driving of the vehicle 1000.

In some embodiments of the present disclosure, the battery 100 may not only serve as an operating power source for the vehicle 1000, but can also serve as a driving power source for the vehicle 1000, completely or partially replacing fuel oil or natural gas to provide driving power for the vehicle 1000.

FIG. 2 is a schematic three-dimensional exploded view of a battery 100 according to an embodiment of the present disclosure.

As shown in FIG. 2, the battery 100 includes a battery box 10 and at least one battery cell 20. The battery box 10 is provided with an accommodating space, and the at least one battery cell 20 is accommodated in the accommodating space.

In some embodiments of the present disclosure, the battery box 10 includes a box body 102 and a box cover 101. The box cover 101 is placed over the box body 102, thereby forming an accommodating space between the box body 102 and the box cover 101.

The box body 102 may be a hollow structure with one end open, the box cover 101 may be a plate-like structure, and the box cover 101 covers the open side of the box body 102 so that the box cover 101 and the box body 102 jointly define the accommodating space. The box cover 101 and the box body 102 may alternatively both be hollow structures with one side open, and the open side of the box cover 101 covers the open side of the box body 102. Certainly, the battery box 10 formed by the box cover 101 and the box body 102 may have various shapes, such as a cylinder, a rectangle, or the like.

The battery cell 20 refers to the smallest unit that constitutes a battery. In the battery 100, multiple battery cells 20 may be provided. The multiple battery cells 20 may be connected in series, in parallel, or in series-parallel. The series-parallel connection means that the multiple battery cells 20 are in both series connection and parallel connection. The multiple battery cells 20 may be directly connected in series, in parallel or in series-parallel, and then an entirety formed by the multiple battery cells 20 is placed in the accommodating space formed by the box body 102 and the box cover 101. Certainly, the battery 100 may alternatively be formed as follows: multiple battery cells 20 first are connected in series, in parallel or in series-parallel to form battery modules, and then multiple battery modules are connected in series, in parallel or in series-parallel to form an entirety accommodated in the accommodating space formed by the box body 102 and the box cover 101. The battery 100 may further include other structures. For example, the battery 100 may further include a busbar for electrical connection between multiple battery cells 20.

In the embodiments of the present disclosure, the battery cell 20 may be a secondary battery. A secondary battery refers to a reusable battery cell that is recharged to activate an active material after discharge.

The battery cell 20 may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickelcadmium battery, a lead-acid battery, or the like. The embodiments of the present disclosure are not limited thereto.

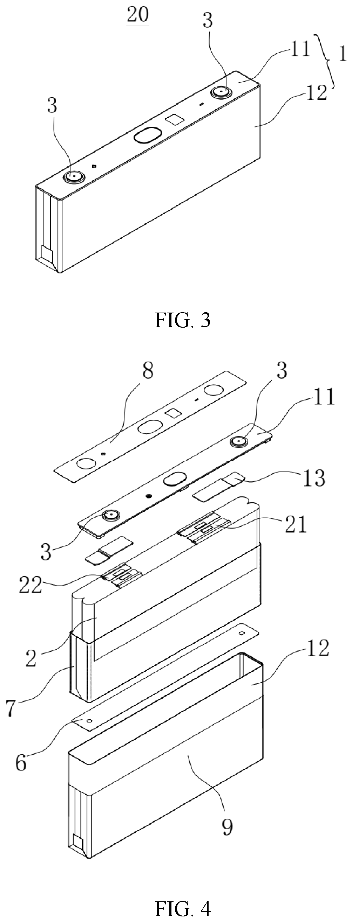

Some embodiments of the present disclosure are described in detail below with reference to FIG. 3 to FIG. 12.

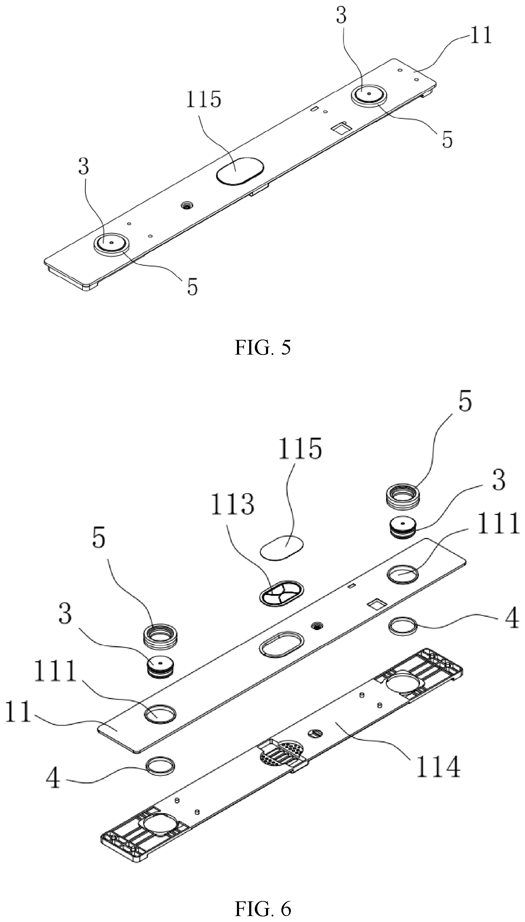

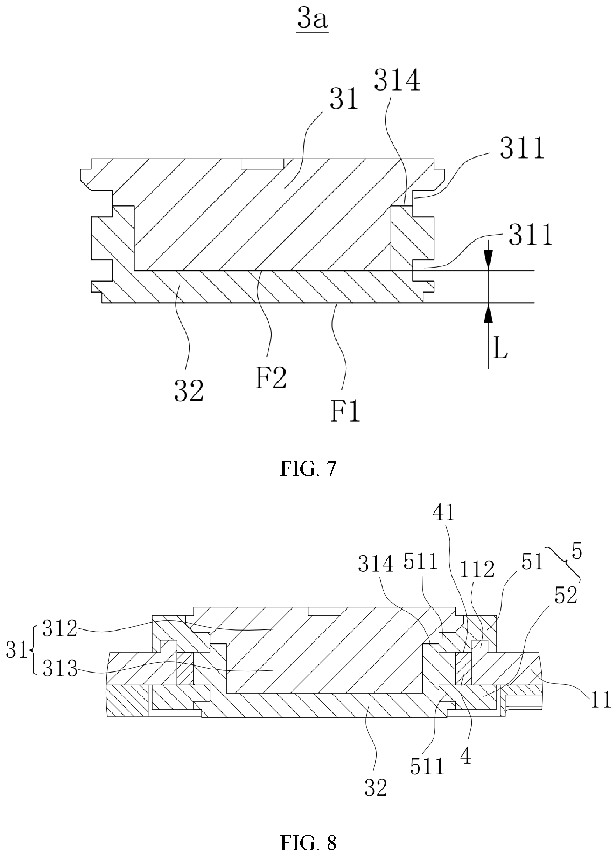

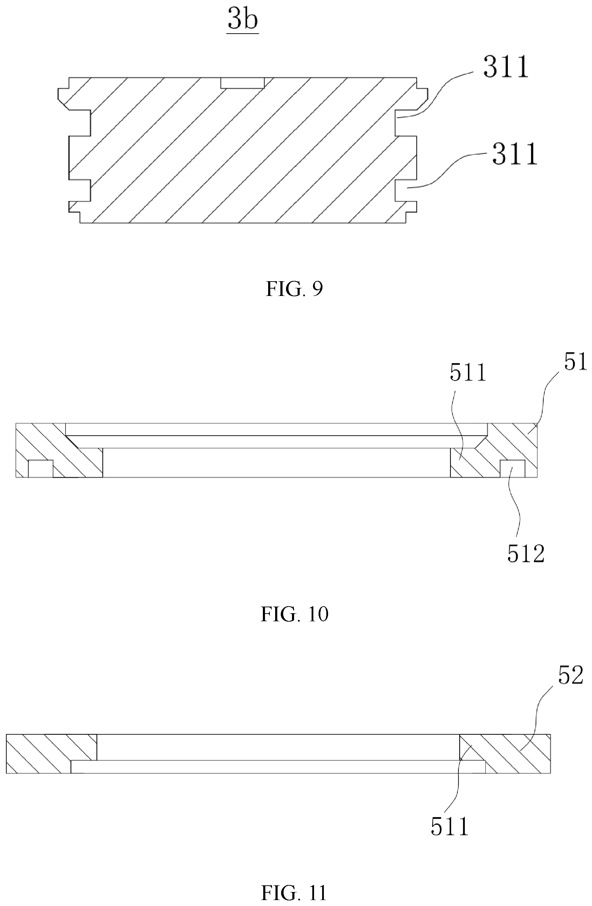

FIG. 3 is a schematic three-dimensional structural diagram of a battery cell according to some embodiments of the present disclosure; FIG. 4 is a schematic exploded view of a battery cell according to some embodiments of the present disclosure; FIG. 5 is a schematic three-dimensional structural diagram of an end cap of a battery cell according to some embodiments of the present disclosure; FIG. 6 is a schematic three-dimensional exploded view of a structure at an end cap of a battery cell according to some embodiments of the present disclosure; FIG. 7 is a cross-sectional view of a first pole according to some embodiments of the present disclosure; FIG. 8 is a cross-sectional view of a structure at a first pole of a battery cell according to some embodiments of the present disclosure; FIG. 9 is a cross-sectional view of a second pole provided according to embodiments of the present disclosure; FIG. 10 is a cross-sectional view of a first fastening structure according to some embodiments of the present disclosure; and FIG. 11 is a cross-sectional view of a second fastening structure according to some embodiments of the present disclosure.

According to a first aspect of the present disclosure, a battery cell 20 is provided. As shown in FIG. 3 to FIG. 8, the battery cell 20 includes a casing 1, an electrode assembly 2, a pole 3, and a seal ring 4. The casing 1 has an accommodating cavity, and a first wall of the casing 1 is provided with a pole mounting hole 111. The electrode assembly 2 is accommodated in the accommodating cavity. The pole 3 is at least partially inserted into the pole mounting hole 111 and is connected to the electrode assembly 2. The seal ring 4 is at least partially sandwiched between an outer peripheral surface of the pole 3 and an inner wall of the pole mounting hole 111.

The electrode assembly 2 is a component in the battery cell 20 where electrochemical reactions occur. The casing 1 may contain one or more electrode assemblies 2. The electrode assembly 2 is mainly formed by winding or stacking a positive electrode sheet and a negative electrode sheet, and a separator is usually provided between the positive electrode sheet and the negative electrode sheet. Parts of the positive electrode sheet and the negative electrode sheet that have active materials form a body of the electrode assembly, and parts of the positive electrode sheet and the negative electrode sheet that do not have active materials respectively form respective tabs. The positive electrode tab 22 and the negative electrode tab 21 may be located at one end of the body or respectively located at two ends of the body. During the charge and discharge of the battery, the positive active material and the negative active material react with the electrolyte, and the pole 3 is connected to the positive electrode tab 22 or the negative electrode tab 21.

The pole 3 is mounted at the casing 1 of the battery cell 20 and electrically connected to the electrode assembly 2 to output the electric energy generated by the electrode assembly 2. For example, the pole 3 may be directly connected to the positive electrode tab 22 or the negative electrode tab 21 of the electrode assembly 2, or may be indirectly connected thereto through the current collector 13. The pole 3 is made of a conductive material to achieve the conductive function. One pole 3 may be provided, and the pole 3 is connected to one of the positive electrode tab 22 and the negative electrode tab 21, and the other of the positive electrode tab 22 and the negative electrode tab 21 is connected to the casing 1. More than two poles 3 may be provided, at least one of which is connected to the positive electrode tab 22, and the rest are connected to the negative electrode tab 21. When more than two poles 3 are provided, a seal ring 4 is sandwiched between each pole 3 and the inner wall of the pole mounting hole 111 into which the pole 3 is inserted.

Only part of the seal ring 4 is sandwiched between the outer peripheral surface of the pole 3 and the inner wall of the pole mounting hole 111, or the seal ring 4 may be entirely sandwiched between the outer peripheral surface of the pole 3 and the inner wall of the pole mounting hole 111.

In the battery cell 20 according to the embodiments of the present disclosure, the seal ring 4 is at least partially sandwiched between the outer peripheral surface of the pole 3 and the inner wall of the pole mounting hole 111. This reduces the height space occupied by the seal ring 4 and improves the volumetric energy density of the battery cell 20.

In some embodiments of the present disclosure, as shown in FIG. 3 and FIG. 4, the casing 1 includes an end cap 11 and a shell 12. The shell 12 is provided with an accommodating cavity and an opening. The electrode assembly 2 is arranged in the accommodating cavity. The end cap 11 closes the opening of the shell 12. The first wall provided with the pole mounting hole 111 may be any wall surface of the shell 12, or may be the end cap 11. That is, the pole 3 may be provided on any wall surface of the shell 12 or on the end cap 11.

The end cap 11 refers to a component that covers the opening of the shell 12 to isolate the internal environment of the battery cell 20 from the external environment. Without limitation, a shape of the end cap 11 may be adapted to the shape of the shell 12 to fit the shell 12. Optionally, the end cap 11 may be made of a material with certain hardness and strength (such as aluminum alloy). In this way, the end cap 11 is not prone to deformation when subjected to extrusion or collision, so that the battery cell 20 has a higher structural strength and improved safety performance. The pole 3 is electrically connected to the electrode assembly 2 for outputting or inputting electric energy of the battery cell 20.

In some embodiments of the present disclosure, as shown in FIG. 6, the end cap 11 may also be provided with a pressure relief mechanism 113 for relieving internal pressure when the internal pressure or temperature of the battery cell 20 reaches a threshold. The pressure relief mechanism 113 may be, but is not limited to, an explosion-proof valve. A pressure relief mechanism protective patch 115 is attached to an outer side of the pressure relief mechanism 113. The end cap 11 may be made of various materials, such as copper, iron, aluminum, stainless steel, aluminum alloy, plastic, or the like. This is not specifically limited in the embodiments of the present disclosure. In some embodiments of the present disclosure, an insulating structure 114 may further be provided on the inner side of the end cap 11. The insulating structure 114 may be used to isolate an electrical connection component in the shell 12 from the end cap 11 to reduce the risk of short circuit. For example, the insulating structure 114 may be plastic, rubber, or the like.

The shell 12 is a component used to cooperate with the end cap 11 to form the internal environment of the battery cell 20, where the formed internal environment may be used to accommodate the electrode assembly 2, the electrolyte, and other components. The shell 12 and the end cap 11 may be independent components. An opening may be provided on the shell 12, and the end cap 11 at the opening is used to cover the opening to form the internal environment of the battery cell 20. Without limitation, the end cap 11 and the shell 12 may also be integrated. Specifically, the end cap 11 and the shell 12 may first form a common connection surface before other components are placed into the shell. When the interior of the shell 12 needs to be packaged, the end cap 11 covers the shell 12. The shell 12 may have various shapes and sizes, such as a rectangle, a cylinder, or a hexagonal prism. Specifically, the shape of the shell 12 may be determined based on the specific shape and size of the electrode assembly 2. The shell 12 may be made of various materials, such as copper, iron, aluminum, stainless steel, aluminum alloy, and plastic. This is not specifically limited in the embodiments of the present disclosure.

For example, the pole 3 is connected to the end cap 11 of the casing 1.

In some embodiments of the present disclosure, as shown in FIG. 5, the battery cell 20 further includes a fastening structure 5, and the pole 3 is fastened to the first wall through the fastening structure 5.

The arrangement of the fastening structure 5 achieves the fixed connection between the pole 3 and the first wall of the casing 1, so that the seal ring 4 is more firmly sandwiched between the outer peripheral surface of the pole 3 and the inner wall of the pole mounting hole 111. This reduces the height space occupied by the seal ring 4 and improves the volumetric energy density of the battery cell 20.

In some embodiments of the present disclosure, as shown in FIG. 7 and FIG. 8, one of the outer peripheral surface of the pole 3 and the inner peripheral surface of the fastening structure 5 is provided with a recessed portion 311, and the other is provided with a protruding portion 511. The protruding portion 511 is engaged with the recessed portion 311.

For example, as shown in FIG. 7 to FIG. 11, the outer peripheral surface of the pole 3 is provided with a recessed portion 311, the inner peripheral surface of the fastening structure 5 is provided with a protruding portion 511, and the protruding portion 511 is engaged with the recessed portion 311.

For example, the outer peripheral surface of the pole 3 is provided with a protruding portion 511, the inner peripheral surface of the fastening structure 5 is provided with a recessed portion 311, and the protruding portion 511 is engaged with the recessed portion 311.

In this way, the engagement between the recessed portion 311 and the protruding portion 511 improves the connection strength between the pole 3 and the fastening structure 5, which helps improve the connection strength between the pole 3 and the casing 1. In addition, since the seal ring 4 is sandwiched between the outer peripheral surface of the pole 3 and the inner wall of the pole mounting hole 111, the height space occupied by the seal ring 4 is reduced, and the volumetric energy density of the battery cell 20 is improved.

In some embodiments of the present disclosure, the fastening structure 5 includes a first fastening structure 51 and a second fastening structure 52 separately connected to an outer surface and an inner surface of the first wall. The first fastening structure 51 and the second fastening structure 52 are separately connected to the outer peripheral surface of the pole 3. The first fastening structure 51 and the second fastening structure 52 are respectively connected to two ends of the seal ring 4 along the axial direction of the pole 3.

In this way, the connection strength between the fastening structure 5 and the pole 3 is improved, which helps improve the connection strength between the pole 3 and the casing 1; moreover, the first fastening structure 51 and the second fastening structure 52 fasten the seal ring 4 in an axial direction of the pole 3, which improves the reliability of the fastening of the seal ring 4 and improves the sealing performance of the seal ring 4 to the pole 3, thereby reducing the probability of electrolyte leakage, and further prolonging the service life of the battery cell 20. Further, since the seal ring 4 is sandwiched between the outer peripheral surface of the pole 3 and the inner wall of the pole mounting hole 111, the height space occupied by the seal ring 4 is reduced, and the volumetric energy density of the battery cell 20 is improved.

In some embodiments of the present disclosure, both the first fastening structure 51 and the second fastening structure 52 are made of insulating materials.

In this way, the function of the fastening structure 5 to fasten the pole 3 is achieved, and the pole 3 and the casing 1 are insulated to implement the normal function of the battery cell 20.

In some embodiments of the present disclosure, the first fastening structure 51 and the second fastening structure 52 are both plastic parts, and the plastic parts are made by injection molding. In this way, the connection strength is improved and the insulating effect is achieved.

In some embodiments of the present disclosure, a material of the plastic part includes at least one of polyphenylene sulfide, polypropylene, polyvinyl fluoride copolymer, and polybutylene terephthalate.

In some embodiments of the present disclosure, the inner peripheral surfaces of the first fastening structure 51 and the second fastening structure 52 are each provided with at least one protruding portion 511, the outer peripheral surface of the pole 3 is provided with at least two recessed portions 311, and the protruding portion 511 is engaged with the recessed portion 311 in a one-to-one correspondence.

For example, the inner peripheral surface of the first fastening structure 51 is provided with one protruding portion 511, the inner peripheral surface of the second fastening structure 52 is provided with one protruding portion 511, the outer peripheral surface of the pole 3 is provided with two recessed portions 311, and the protruding portion 511 is engaged with the recessed portion 311 in a one-to-one correspondence.

In this way, the strengths of connection of the pole 3 with the first fastening structure 51 and the second fastening structure 52 are improved, thereby improving the connection strength between the pole 3 and the casing 1. Moreover, since the seal ring 4 is sandwiched between the outer peripheral surface of the pole 3 and the inner wall of the pole mounting hole 111, the height space occupied by the seal ring 4 is reduced, and the volumetric energy density of the battery cell 20 is improved.

In some embodiments of the present disclosure, as shown in FIG. 8 and FIG. 10, an outer surface of the first wall is provided with an engaging protrusion 112, and the first fastening structure 51 is provided with a slot 512 that engages with the engaging protrusion 112.

In this way, the connection strength between the casing 1 and the first fastening structure 51 is improved, thereby improving the structural strength of the battery cell 20; moreover, since the seal ring 4 is sandwiched between the outer peripheral surface of the pole 3 and the inner wall of the pole mounting hole 111, the height space occupied by the seal ring 4 is reduced, and the volumetric energy density of the battery cell 20 is improved.

In some embodiments of the present disclosure, at least two poles 3 are provided. A seal ring 4 is sandwiched between each pole 3 and the inner wall of the pole mounting hole 111 into which the pole 3 is inserted. The at least two poles 3 include a first pole 3a and a second pole 3b. The first pole 3a is connected to the negative electrode tab 21 of the electrode assembly 2, and the second pole 3b is connected to the positive electrode tab 22 of the electrode assembly 2.

The first pole 3a is connected to the negative electrode tab 21 of the electrode assembly 2, and the second pole 3b is connected to the positive electrode tab 22 of the electrode assembly 2. Then, the first pole 3a serves as a negative electrode pole of the battery cell 20, and the second pole 3b serves as a positive electrode pole of the battery cell 20. The seal rings 4 of both the positive electrode pole and the negative electrode pole are sealed radially, which reduces the height space occupied by the seal rings 4 and improves the volumetric energy density of the battery cell 20.

In some embodiments of the present disclosure, the first pole 3a includes a first pole portion 31 and a second pole portion 32 connected to the first pole portion 31. An end of the second pole portion 32 facing away from the first pole portion 31 is connected to the negative electrode tab 21. The first pole portion 31 and the second pole portion 32 are made of different conductive materials, and the first pole portion 31 is made of aluminum material.

The first pole 3a serves as the negative electrode pole of the battery cell 20. The second pole portion 32 is interposed between the first pole portion 31 and the accommodating cavity, so that the electrolyte in the accommodating cavity is not prone to contact the first pole portion 31. Therefore, even if the first pole portion 31 is made of aluminum material, corrosion of the aluminum material due to contact between the electrolyte and the aluminum material is not likely to occur. Moreover, the cost of aluminum material is low, so the material cost of the battery cell 20 is reduced. Moreover, an end of the first pole portion 31 close to the accommodating cavity is inserted into a groove of the second pole portion 32, which further reduces the probability that the first pole portion 31 comes into contact with the electrolyte in the accommodating cavity and further reduces the probability that the electrolyte corrodes the aluminum material.

In some embodiments of the present disclosure, the second pole portion 32 is made of copper material.

Copper material as a negative electrode is not prone to oxidation reaction with the electrolyte, that is, the electrolyte is not prone to corrode the copper material. Therefore, using copper material for the second pole portion 32 close to the electrolyte reduces the probability that the electrolyte corrodes the first pole 3a, which helps prolong the service life of the battery cell 20.

In some embodiments of the present disclosure, the second pole portion 32 may be made of, but is not limited to, materials such as zinc, lead or carbon.

In some embodiments of the present disclosure, a surface of the second pole portion 32 facing away from the accommodating cavity is formed with a groove, and a portion of the first pole portion 31 is inserted into the groove.

The groove of the second pole portion 32 may be a cylindrical groove, a cubic groove, or another three-dimensional groove, as long as it allows partial insertion with the first pole portion 31. The shape of the groove of the second pole portion 32 is not specifically limited. A part of the first pole portion 31 inserted into the groove matches the shape of the groove, so that at least a part of the surface of the first pole portion 31 contacts the inner wall of the groove, thereby achieving electrical connection between the two. For example, the entire surface of the part of the first pole portion 31 inserted into the groove contacts the entire inner wall of the groove to improve the connection strength between the first pole portion 31 and the second pole portion 32.

In the battery cell 20 according to the embodiments of the present disclosure, the part of the first pole portion 31 is inserted into the groove of the second pole portion 32, which may increase a contact area between the first pole portion 31 and the second pole portion 32, thereby improving the connection strength between the two. Moreover, when an external force is applied in a direction perpendicular to an insertion direction of the first pole portion 31 and the second pole portion 32, since the part of the first pole portion 31 and the groove of the second pole portion 32 form an engagement, the first pole 3a is not prone to deformation or disconnection at the connection between the first pole portion 31 and the second pole portion 32, thereby improving the structural strength of the first pole 3a and further improving the structural strength of the battery cell 20.

In some embodiments of the present disclosure, the connection method between the first pole portion 31 and the second pole portion 32 includes friction welding.

By using the friction welding connection method, the part of the first pole portion 31 inserted into the groove of the second pole portion 32 and the inner wall of the groove are firmly welded, improving the reliability of the connection between the first pole portion 31 and the second pole portion 32, further improving the structural strength of the first pole 3a, and thereby improving the structural strength of the battery cell 20.

In some embodiments of the present disclosure, the groove does not penetrate through into a surface of the second pole portion 32 facing the accommodating cavity and does not penetrate through into an outer peripheral surface of the second pole portion 32.

In this way, the second pole portion 32 is interposed between the accommodating cavity and the first pole portion 31, which reduces the probability that the electrolyte contacts the first pole portion 31, thereby reducing the probability that the first pole portion 31 is corroded, which helps prolong the service life of the battery cell 20.

In some embodiments of the present disclosure, the outer peripheral surface of the second pole portion 32 is provided with at least one recessed portion 311, and the recessed portion 311 provided on the second pole portion 32 does not penetrate through into an inner wall of the groove.

In this way, the connection strength between the second pole portion 32 and the fastening structure 5 is improved, and the recessed portion 311 does not penetrate through into the inner wall of the groove, which reduces the probability that the electrolyte enters the groove to contact the first pole portion 31, reducing the probability that the first pole portion 31 is corroded, and prolonging the service life of the battery cell 20.

In some embodiments of the present disclosure, the fastening structure 5 includes a first fastening structure 51 and a second fastening structure 52. The first fastening structure 51 and the second fastening structure 52 are respectively connected to an outer surface and an inner surface of the first wall. An outer peripheral surface of the first pole portion 31 is connected to an inner peripheral surface of the first fastening structure 51, and an outer peripheral surface of the second pole portion 32 is connected to an inner peripheral surface of the second fastening structure 52.

The inner peripheral surface of the first fastening structure 51 may be connected only to the outer peripheral surface of the first pole portion 31 and not to the outer peripheral surface of the second pole portion 32; the inner peripheral surface of the first fastening structure 51 may be connected to both the outer peripheral surface of the first pole portion 31 and the outer peripheral surface of the second pole portion 32. Correspondingly, the inner peripheral surface of the second fastening structure 52 may be connected only to the outer peripheral surface of the second pole portion 32 and not to the outer peripheral surface of the first pole portion 31; the inner peripheral surface of the second fastening structure 52 may be connected to both the outer peripheral surface of the second pole portion 32 and the outer peripheral surface of the first pole portion 31.

For example, as shown in FIG. 8, the inner peripheral surface of the first fastening structure 51 is connected to both the outer peripheral surface of the first pole portion 31 and the outer peripheral surface of the second pole portion 32, and the inner peripheral surface of the second fastening structure 52 is connected only to the outer peripheral surface of the second pole portion 32 and not to the outer peripheral surface of the first pole portion 31.

In this way, the first pole portion 31 is connected to the outer surface of the first wall through the first fastening structure 51, and the second pole portion 32 is connected to the inner surface of the first wall through the second fastening structure 52, which further improves the reliability of the connection between the pole 3 and the first wall, thereby improving the structural strength of the battery cell 20.

In some embodiments of the present disclosure, the outer peripheral surfaces of the first pole portion 31 and the second pole portion 32 are both provided with recessed portions 311, the inner peripheral surfaces of the first fastening structure 51 and the second fastening structure 52 are both provided with protruding portions 511, the recessed portion 311 of the first pole portion 31 is engaged with the protruding portion 511 of the first fastening structure 51, and the recessed portion 311 of the second pole portion 32 is engaged with the protruding portion 511 of the second fastening structure 52. In this way, the connection strength between the pole 3 and the fastening structure 5 is further improved.

In some embodiments of the present disclosure, as shown in FIG. 10, the first fastening structure 51 is provided with a protruding portion 511. As shown in FIG. 8, an edge of the outer peripheral surface of the first pole portion 31 close to the second pole portion 32 is provided with a first recessed structure, and an edge of the outer peripheral surface of the second pole portion 32 close to the first pole portion 31 is provided with a second recessed structure. The first recessed structure and the second recessed structure are combined to form a recessed portion 311. The recessed portion 311 is engaged with the protruding portion 511 of the first fastening structure 51. In this way, the protruding portion 511 of the first fastening structure 51 is engaged with both the first pole portion 31 and the second pole portion 32, improving the connection strength.

In some embodiments of the present disclosure, a minimum distance between the surface of the second pole portion 32 facing the accommodating cavity and an inner wall of the groove facing away from the accommodating cavity is not less than 1 mm.

As shown in FIG. 7, the surface of the second pole portion 32 facing the accommodating cavity is F1, the inner wall of the groove facing away from the accommodating cavity is F2, the minimum distance between the surface F1 and the inner wall F2 is L, and L≥1 mm.

For example, the minimum distance L between the surface of the second pole portion 32 facing the accommodating cavity and the inner wall of the groove facing away from the accommodating cavity is equal to 1 mm, 1.1 mm, 1.2 mm, 1.3 mm, 1.4 mm, 1.5 mm, 1.6 mm, 1.7 mm, 1.8 mm, 1.9 mm, 2 mm, or the like.

In this way, the part of the second pole portion 32 interposed between the first pole portion 31 and the accommodating cavity is relatively thick, which reduces the probability that the second pole portion 32 penetrates this part during welding to the first pole portion 31, thereby reducing the probability that the first pole portion 31 is corroded, which helps prolong the service life of the battery cell 20.

In some embodiments of the present disclosure, as shown in FIG. 8, the first pole portion 31 includes a base 312 and an insertion portion 313 connected to an end of the base 312 facing the accommodating cavity. The insertion portion 313 is inserted into the groove. An outer peripheral edge of the base 312 extends beyond the insertion portion 313 and forms a flange surface facing the accommodating cavity at a connection position between the two. The flange surface and an end surface of an end of the second pole portion 32 facing away from the accommodating cavity jointly define a first interface 314. A surface of the seal ring 4 facing away from the accommodating cavity and the first fastening structure 51 jointly define a second interface 41. The first interface 314 is offset from the second interface 41 toward a side away from the accommodating cavity.

The "end surface of the end of the second pole portion 32 facing away from the accommodating cavity" refers to a part of a surface of the second pole portion 32 facing away from the accommodating cavity except for the inner wall of the groove, and is also a surface of the second pole portion 32 facing away from the accommodating cavity and surrounding an outer periphery of the groove.

The formation of the first interface 314 further increases the contact area between the first pole portion 31 and the second pole portion 32, thereby further improving the structural strength of the pole 3 and further improving the structural strength of the battery cell 20. The first interface 314 is offset from the second interface 41 toward the side away from the accommodating cavity, so that the seal ring 4 contacts the second pole portion 32 and does not contact the first pole portion 31. In this way, the electrolyte is less likely to contact the first pole portion 31 and further prolongs the service life of the battery cell 20.

In some embodiments of the present disclosure, the second pole 3b is made of aluminum material.

The second pole 3b serves as a positive electrode pole. Aluminum material as a positive electrode pole is not prone to oxidation reaction with the electrolyte, and therefore is not prone to corrode the aluminum material. In this way, the cost of aluminum material is low, and the material cost of the battery cell 20 is reduced without affecting the service life of the battery cell 20.

In some embodiments of the present disclosure, a structure of the second pole 3b is similar to that of the first pole 3a. The second pole is formed by connection of at least two parts through concave-convex fitting. For the specific structure, reference may be made to the foregoing description of the structure of the first pole 3a and is not repeated herein.

In some embodiments of the present disclosure, as shown in FIG. 9, the second pole 3b is provided as an integrally formed structure.

For example, the second pole 3b is provided as an integrally formed structure, which improves the structural strength of the second pole 3b and further improves the structural strength of the battery cell 20, thereby prolonging the service life of the battery cell 20.

In some embodiments of the present disclosure, as shown in FIG. 4, the negative electrode tab 21 and the positive electrode tab 22 of the electrode assembly 2 are located at a same end of the body. A bottom support plate 6 is provided between the shell 12 and a side of the body facing away from the negative electrode tab 21 and the positive electrode tab 22; a blue film 9 is attached to an outer surface of the shell 12; an insulating sheet 7 is attached to an inner wall of the shell 12, where the insulating sheet 7 is used to insulate the electrode assembly 2 from the shell 12; and a top cover patch 8 is attached to an outer surface of the end cap 11.

According to a second aspect of the present disclosure, a battery 100 is provided. The battery 100 includes at least one battery cell 20 according to the first aspect.

Since the battery 100 includes the battery cell 20 according to the first aspect, the battery 100 includes all the beneficial effects of the battery cell 20, and therefore, a volumetric energy density of the battery 100 is improved.

According to a third aspect of the present disclosure, an energy storage apparatus is provided. The energy storage apparatus includes the battery cell 20 according to the first aspect or the battery 100 according to the second aspect.

Since the battery cell 20 according to the first aspect or the battery 100 according to the second aspect has a high volumetric energy density, the occupation of space inside the energy storage apparatus is reduced or higher total energy is stored in a limited space.

According to a fourth aspect of the present disclosure, an electric apparatus is provided. The electric apparatus includes the battery cell 20 according to the first aspect or the battery 100 according to the second aspect for providing electric energy.

Since the battery cell 20 according to the first aspect or the battery 100 according to the second aspect has a high volumetric energy density, the occupation of space inside the electric apparatus is reduced or higher total energy is provided with a limited space.

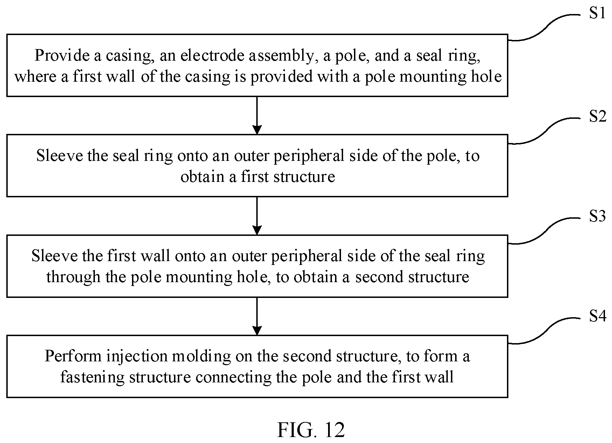

FIG. 12 is a flowchart of a manufacturing method for a battery cell according to some embodiments of the present disclosure.

According to a fifth aspect of the present disclosure, a manufacturing method for battery cell is provided, including:
S1. providing a casing, an electrode assembly, a pole, and a seal ring, where a first wall of the casing is provided with a pole mounting hole;
S2. sleeving the seal ring onto an outer peripheral side of the pole, to obtain a first structure; and
S3. sleeving the first wall onto an outer peripheral side of the seal ring through the pole mounting hole, to obtain a second structure; where
the seal ring 4 in the second structure is sandwiched between the outer peripheral surface of the pole 3 and the inner wall of the pole mounting hole 111.

In the battery cell 20 manufactured by using the manufacturing method for battery cell according to the embodiments of the present disclosure, the seal ring 4 is at least partially sandwiched between the outer peripheral surface of the pole 3 and the inner wall of the pole mounting hole 111. This reduces the height space occupied by the seal ring 4 and improves the volumetric energy density of the battery cell 20.

In some embodiments of the present disclosure, after obtaining the second structure, the method further includes:
S4. performing injection molding on the second structure, to form a fastening structure connecting the pole and the first wall.

The fastening structure 5 formed by injection molding enables the pole 3 to be fixedly connected to the first wall of the casing 1, so that the seal ring 4 is more firmly sandwiched between the outer peripheral surface of the pole 3 and the inner wall of the pole mounting hole 111. This reduces the height space occupied by the seal ring 4 and improves the volumetric energy density of the battery cell 20.

Specific examples of some embodiments of the present disclosure are described below with reference to the accompanying drawings.

As a specific example, a battery cell 20 is provided. A sealing structure (seal ring 4) of the battery cell 20 is clamped from both sides by a pole (pole 3) and an inner wall of a pole mounting hole (pole mounting hole 111) in a radial direction of the pole, implementing a sealing function under radial compression. A negative electrode pole (first pole 3a) in the pole includes a first part (first pole portion 31) made of aluminum material and a second part (second pole portion 32) made of copper material. A surface of the second part facing away from an accommodating cavity of the battery cell 20 is provided with a groove. A part of the first part is inserted into the groove. The part of the first part inserted into the groove and an inner bottom wall of the groove jointly define a first composite interface. The part of the first part inserted into the groove and an inner side wall of the groove jointly define a second composite interface. A part of the first part not inserted into the groove and the surface of the second part facing away from the accommodating cavity of the battery cell 20 jointly define a third composite interface (first interface 314). The first part and the second part form three composite interfaces: the first composite interface, the second composite interface, and the third composite interface, which increases an interface size of the two parts, increases a contact area, and improves a connection strength. The negative electrode pole is a copper-aluminum composite pole. The second part close to the electrolyte is copper, and the first part away from the electrolyte is aluminum. The second part achieves blockage, which reduces the corrosion of aluminum by the electrolyte. The entire positive electrode pole (second pole 3b) is aluminum, which is non-corrosive and has a lower cost.

The above embodiments are only used to illustrate the technical solutions of the present disclosure, but not to limit it; although the present disclosure has been described in detail with reference to the foregoing embodiments, those of ordinary skill in the art should understand that they can still modify the technical solutions recorded in the foregoing embodiments, or equivalently replace some or all of the technical features therein; and these modifications or replacements do not cause the essence of the corresponding technical solutions to deviate from the scope of the technical solutions of the embodiments of the present disclosure, and they should all be covered within the scope of the specification of the present disclosure. In particular, as long as there is no structural conflict, the technical features mentioned in the embodiments may be combined in any manner.

## Claims

1. A battery cell, comprising:
a casing, wherein the casing is provided with an accommodating cavity, and a first wall of the casing is provided with a pole mounting hole;
an electrode assembly, wherein the electrode assembly is accommodated in the accommodating cavity;
a pole, wherein the pole is at least partially inserted into the pole mounting hole and connected to the electrode assembly; and
a seal ring, wherein the seal ring is at least partially sandwiched between an outer peripheral surface of the pole and an inner wall of the pole mounting hole.

2. The battery cell according to claim 1, wherein the battery cell further comprises a fastening structure, and the pole is fastened to the first wall through the fastening structure.

3. The battery cell according to claim 2, wherein one of the outer peripheral surface of the pole and an inner peripheral surface of the fastening structure is provided with a recessed portion, and the other is provided with a protruding portion; and the protruding portion is engaged with the recessed portion.

4. The battery cell according to claim 3, wherein the fastening structure comprises a first fastening structure and a second fastening structure respectively connected to an outer surface and an inner surface of the first wall, the first fastening structure and the second fastening structure are separately connected to the outer peripheral surface of the pole, and the first fastening structure and the second fastening structure are respectively connected to two ends of the seal ring along an axial direction of the pole.

5. The battery cell according to claim 4, wherein both the first fastening structure and the second fastening structure are made of insulating materials.

6. The battery cell according to claim 4 or 5, wherein inner peripheral surfaces of the first fastening structure and the second fastening structure are each provided with at least one protruding portion, the outer peripheral surface of the pole is provided with at least two recessed portions, and the protruding portion is engaged with the recessed portion in a one-to-one correspondence.

7. The battery cell according to any one of claims 4 to 6, wherein the outer surface of the first wall is provided with an engaging protrusion, and the first fastening structure is provided with a slot that engages with the engaging protrusion.

8. The battery cell according to any one of claims 4 to 7, wherein at least two poles are provided, the seal ring is sandwiched between each of the poles and an inner wall of a pole mounting hole into which the pole is inserted, the at least two poles comprise a first pole and a second pole, the first pole is connected to a negative electrode tab of the electrode assembly, and the second pole is connected to a positive electrode tab of the electrode assembly.

9. The battery cell according to claim 8, wherein the first pole comprises a first pole portion and a second pole portion connected to the first pole portion, and an end of the second pole portion facing away from the first pole portion is connected to the negative electrode tab; and
the first pole portion and the second pole portion are made of different conductive materials, and the first pole portion is made of aluminum material.

10. The battery cell according to claim 9, wherein the second pole portion is made of copper material.

11. The battery cell according to claim 9 or 10, wherein a surface of the second pole portion facing away from the accommodating cavity is formed with a groove, and a part of the first pole portion is inserted into the groove.

12. The battery cell according to claim 11, wherein the groove does not penetrate through into a surface of the second pole portion facing the accommodating cavity and does not penetrate through into an outer peripheral surface of the second pole portion.

13. The battery cell according to claim 11 or 12, wherein the outer peripheral surface of the second pole portion is provided with at least one recessed portion, and the recessed portion provided on the second pole portion does not penetrate through into an inner wall of the groove.

14. The battery cell according to any one of claims 11 to 13, wherein a minimum distance between the surface of the second pole portion facing the accommodating cavity and an inner wall of the groove facing away from the accommodating cavity is not less than 1 mm.

15. The battery cell according to any one of claims 11 to 14, wherein the first pole portion comprises a base and an insertion portion connected to an end of the base facing the accommodating cavity, the insertion portion is inserted into the groove, an outer peripheral edge of the base extends beyond the insertion portion and forms a flange surface facing the accommodating cavity at a connection position between the two, the flange surface and an end surface of an end of the second pole portion facing away from the accommodating cavity jointly define a first interface, a surface of the seal ring facing away from the accommodating cavity and the first fastening structure jointly define a second interface, and the first interface is offset from the second interface toward a side away from the accommodating cavity.

16. A battery, wherein the battery comprises:
at least one battery cell according to any one of claims 1 to 15.

17. An energy storage apparatus, wherein the energy storage apparatus comprises the battery cell according to any one of claims 1 to 15 or the battery according to claim 16.

18. An electric apparatus, wherein the electric apparatus comprises the battery cell according to any one of claims 1 to 15 or the battery according to claim 16 for providing electric energy.

19. A manufacturing method for battery cell, comprising:
providing a casing, an electrode assembly, a pole, and a seal ring, wherein a first wall of the casing is provided with a pole mounting hole;
sleeving the seal ring onto an outer peripheral side of the pole, to obtain a first structure; and
sleeving the first wall onto an outer peripheral side of the seal ring through the pole mounting hole, to obtain a second structure;
wherein the seal ring in the second structure is sandwiched between an outer peripheral surface of the pole and an inner wall of the pole mounting hole.

20. The manufacturing method for battery cell according to claim 19, wherein after obtaining the second structure, the method further comprises:
performing injection molding on the second structure, to form a fastening structure connecting the pole and the first wall.
